# EUROPÄISCHE PATENTSCHRIFT

(11) **EP 0 907 919 B1**
(45) Veröffentlichungstag und Bekanntmachung des Hinweises auf die Patenterteilung: **10.10.2001**
(21) Anmeldenummer: 97930401.1
(22) Anmeldetag: 25.06.1997
(51) Int. Cl.: G06F 11/16

(54) **VORRICHTUNG ZUM BETREIBEN VON ZWEI FUNKTIONSMÄSSIG PARALLELGESCHALTETEN PROZESSOREN**
ARRANGEMENT FOR OPERATING TWO FUNCTIONALLY PARALLEL PROCESSORS
DISPOSITIF POUR FAIRE FONCTIONNER DEUX PROCESSEURS MONTES FONCTIONNELLEMENT EN PARALLELE

(30) Priorität: 29.06.1996 DE 19626184
(43) Veröffentlichungstag der Anmeldung: 14.04.1999
(73) Patentinhaber: Lahmann, Alexander Ernst Edwin, 44147 Dortmund (DE)
(72) Erfinder: Lahmann, Alexander Ernst Edwin, 44147 Dortmund (DE)
(74) Vertreter: Füssel, Michael
(86) Internationale Anmeldenummer: EP9703330
(87) Internationale Veröffentlichungsnummer: WO9800782

(56) Entgegenhaltungen:
- US-A- 4 633 039
- US-A- 5 249 188
- DAVIES D AND WAKERLY J F: "Synchronization and Matching in Redundant Systems" IEEE TRANSACTIONS ON COMPUTERS, Bd. 27, Nr. 6, 6.Juni 1978, Seiten 531-539, XP002041652

## Beschreibung

Die vorliegende Erfindung betrifft eine Vorrichtung zum Betreiben von zwei funktionsmäßig parallelgeschalteten Prozessoren nach Oberbegriff von Anspruch 1.

Derartige Prozessoren finden Anwendung in digitalen Rechnern (= Computern). Es gibt derartige Computer einerseits als fest programmierte Steuerungsautomaten oder als frei programmierbare Rechenanlagen, Großrechner, PC's.

Hauptbestandteile solcher Computer sind die Ein- und Ausgänge, der Speicher und der Prozessor, sowie der Taktsignalgeber.

Die Ein- und Ausgänge sowie der Speicher werden üblicherweise als Peripherie bezeichnet. Bei den Prozessoren unterscheidet man ggf. hinsichtlich eines Verarbeitungsprozessors und eines Ein-Ausgabe-Prozessors. Bei den heute üblichen PC's sind Verarbeitungsprozessor und Ein-und Ausgabeprozessor im "Prozessor" zusammengefaßt. Gleichwohl bezieht sich die vorliegende Erfindung sowohl auf Einzelprozessoren, wie z.B. Verarbeitungsprozessoren und Ein-Ausgabe-Prozessoren von Großrechnern als auch auf die heute üblichen "Prozessoren" von PC's und Homecomputern. Wenn im folgenden nur noch von Prozessoren gesprochen wird, werden die obigen Varianten mitumfaßt. Die Steuerung der Peripherie erfolgt durch den Prozessor über Busleitungen. Die Arbeitstakte des Prozessors werden von dem Taktsignalgeber vorgegeben. Es handelt sich hier um eine kontinuierliche Zeitsignalfolge, mit jedem ankommenden Taktsignal führt der Prozessor eine vorbestimmte Rechenoperation aus. Die Frequenz der Taktsignale ist daher ein unmittelbares Maß für die Rechengeschwindigkeit des Prozessors. Die Rechengeschwindigkeit des Prozessors ist daher im Hinblick auf die Frequenz des Taktsignalgebers so abzustimmen, daß eine Rechenoperation beendet ist, bevor der nächste Zeitimpuls kommt.

Prozessoren sind höchstintegrierte Halbleiter-Schaltkreise, die naturgemäß auch bei höchstpräziser Fertigung einer gewissen Fertigungstoleranz unterliegen. Dadurch ist aber nicht die Ablaufsicherheit der Prozessoren beeinträchtigt. Innerhalb der vorgegebenen Fertigungstoleranz ist die Funktionssicherheit des Prozessors stets gegeben, sofern nicht Störeinflüsse die Ablaufsicherheit beeinträchtigen.

Es besteht nämlich die Gefahr, daß ein Prozessor durch äußere Störeinflüsse in der Funktion beeinträchtigt werden kann. Diese Störungen werden durch elektrische oder magnetische Felder von außen in den Computer eingekoppelt und bewirken die Induktion von Spannungen in leitenden Teilen, leitenden Verbindungen hoch integrierter Prozessoren.

Die induzierten Spannungen treten stochastisch auf und sind taktunabhängig. Sie rufen Störströme hervor. Diese Störströme werden den Strömen innerhalb des Prozessors überlagert und rufen dabei unvorhersagbare Fehlfunktionen hervor.

Diese induzierten Spannungen können deshalb dazu führen, daß Informationen, die von der Prozessoreinheit zu den Speicherbausteinen gelangen, verfälscht werden.

Diese Verfälschung führt bei den Ausgabedaten des Computers zu unerwünschten Ergebnissen. Wenn die übermittelten Daten Programmschritte darstellen, folgt oft eine Fehlfunktion durch zufällige unterbrochene oder an anderer, falscher Stelle fortgesetzte Programme. Die Auswirkungen sind erneut unerwünschte Aktionen des Prozessors.

Es existieren bereits Bemühungen, die Ablaufsicherheit von prozessorgesteuerten Geräten zu erhöhen. Bei der Anordnung gemäß DE-OS 26 12 100 werden zwei vollständige Rechner parallelgeschaltet und die Ausgangssignale der beiden Rechner in einer Selbsthalteschaltung miteinander verglichen. Nach dem Vergleichstakt kommt der nächste wirksame Arbeitstakt.

Die Selbsthalteschaltung bildet einen Funktionsbaustein, in welchem die anstehenden einzelnen jeweils gleichnamigen Ausgangssignale der beiden Prozessoren sequentiell miteinander verglichen werden. Dies erfolgt durch eine Abfragesequenz welche erst dann zur Abfrage des nächsten Signals übergeht, wenn das vorausgehene Signal überprüft worden ist. Da stets eine Vielzahl gleichnamiger Signale an den busleitungen zu überprüfen sind, ist die sequentielle Abfrage der einzelnen gleichnamigen Signale mit beachtlichem Zeitaufwand verbunden. Erst nach Durchlaufen der gesamten Abfragesequenz wird der nächste gültige Zeittakt dann an die Prozessoren übermittelt, wenn alle gleichnamigen Ausgangssignale übereinstimmten.

Der Rechenfortschritt der beiden Prozessoren ist bei DE OS 26 12 100 damit abhängig von der Durchreichzeit, die benötigt wird, um die Ausgangssignale des vorangegangenen Arbeitstaktes auf Übereinstimmung zu überprüfen.

Andere gängige Lösungen insbesondere für Anwendungen mit sehr hoher Sicherheitsanforderung aus Luft- und Raumfahrt betrachten den gesamten Rechner, bestehend aus Prozessor, Speicher und Ein- und Ausgängen als eine geschlossene Einheit. Man geht dann davon aus, daß diese Einheit an den Ausgängen unerwünschte Ergebnisse erzeugen kann. Deshalb wird der gesamte Rechner mehrfach, z.B. dreifach oder fünffach angelegt und die Ausgänge über geeignete Abstimmglieder so verbunden, daß das möglicherweise falsche Ergebnis eines der Rechner von den Ergebnissen der anderen Rechner überstimmt wird.

Diese mehrfache Auslegung der Rechnerbaugruppen verursacht jedoch stets hohe Kosten. Diese sind bis auf spezielle Einzelanwendungen jedenfalls nicht gerechtfertigt. Dennoch wünscht man für Anwendungen mit hoher Sicherheitanforderung eine erhöhte Störsicherheit und eine verbesserte Ablaufsicherheit.

In der industriellen Steuerungstechnik gibt es solche Anwendungen mit hoher Sicherheitsanforderung z.B. für Maschinensteuerungen und in der Antriebstechnik. Dort können Fehlfunktionen eines steuernden Rechners hohe Materialschäden verursachen. Die Mehrfachauslegung des Rechners kommt aber oft aus Kostengründen nicht in Frage. Deshalb werden sicherheitsrelevante Funktionen, wie z.B. eine Endabschaltung oft in separater Hardware installiert, z.B. über externe Sensoren, Schalter und Aktoren, auf die der steuernde Rechner keinen Zugriff hat. So können wichtige Abschaltungen auch bei Ausfall des steuernden Rechners durchgeführt werden. Diese parallel installierte Technik verursacht aber oft ebenfalls hohe Kosten, die zusätzlich zu den Kosten für die eigentlich erwünschte Steuerfunktion des Rechners aufgewendet werden müssen. Weiterhin schränken die externen Zusatzeinrichtungen die Funktionalität und Flexibilität ein, derentwegen der Rechner ja gerade eingesetzt wird.

Außerdem greift eine derart konzipierte Abschaltung erst dann in den Prozeß ein, wenn eine Fehlfunktion der zu steuernden Maschine aufgetreten und nicht mehr rückgängig zu machen ist.

Den externen Zusatzeinrichtungen kommt daher auch die Aufgabe zu, den ablaufenden Prozeß so rechtzeitig zu stoppen, daß trotz des aufgetretenen Fehlers des steuernden Rechners materieller Schaden verhindert wird.

Es müssen daher die funktionalen Zusammenhänge zwischen den Prozeßparametern und etwaigen Fehlfunktionen des Rechners im voraus analysiert werden, damit sie von derartig gesteuerten Not-Halt-Steuerungen rechtzeitig erkannt werden können.

Die Komplexität derartiger Anlagen setzt daher eine Fülle an externen Zusatzeinrichtungen voraus, um alle im Wahrscheinlichkeitsbereich liegenden Eventualitäten rechtzeitig erfassen zu können, um den dann erforderlichen Not-Halt auch ausführen zu können.

Aufgabe der Erfindung ist es, die bekannte Vorrichtung so weiterzubilden, daß unter Erhalt der Sicherheitsanforderungen bei gleichzeitig gesteigerten Einsatzmöglichkeiten in der Industrie eine Prozessorschaltung mit erhöhter Ablaufsicherheit entsteht.

Diese Aufgabe löst die Erfindung mit den Merkmalen des Anspruchs 1.

Aus der Erfindung ergibt sich der Vorteil, daß ohne Verlust an Rechenleistung und mit geringen Kosten die Ablaufsicherheit des Rechners überproportional erhöht wird.

Die überproportionale Erhöhung beruht darauf, daß die Wahrscheinlichkeit gleichzeitigen Ausfalls zweier Prozessoren um Größenordnungen geringer ist als die Wahrscheinlichkeit des Ausfalls nur eines einzigen Prozessors.

Da die Erfindung an Prozessoren beliebiger Art, also auch an Ein-Ausgabeprozessoren, Verarbeitungsprozessoren, mathematischen Co-Prozessoren angewandt werden kann, ergibt sich der zusätzliche Vorteil, daß gezielt nur bestimmte Arten von Prozessoren in einem Computer mit der erhöhten Ablaufsicherheit ausgestattet werden können.

Welche Arten von Prozessoren im Einzelfall betroffen sind, kann anhand der Auslegungskriterien bestimmt werden. Das Verfahren nach der vorliegenden Erfindung ist jedenfalls unabhängig von der Art des jeweils betroffenen Prozessors.

Dieser Vorteil wird dadurch erreicht, daß zwei baugleiche Prozessoren - zueinander parallel in einem einzigen Rechner betrieben - , an einem zeitgleich mit den Prozessoren getakteten Funktionsbaustein angeschlossen sind, wo die Ablaufkontrolle der Ausgangssignale der beiden Prozessoren durch Vergleich der jeweils gleichnamigen Ausgangssignale zeitgleich mit deren Auftreten erfolgt, und wo die Ausgangssignale zu einem einzigen Ausgangssignal für die Peripherie zusammengefaßt werden.

Es ist demnach für die Erfindung von Bedeutung, daß die beiden Prozessoren parallel zueinander betrieben werden. Die Betriebsgeschwindigkeit wird von einem einzigen Zeittaktgenerator für das gesamte System vorgegeben. Die Zeittaktsignale des Zeittaktgenerators werden parallel so aufbereitet, daß hieraus die zeitversetzten Signale CPU-clock, anti-jitter, time-out erzeugt werden.

Aus dem Signal CPU-clock erhält der eine wie der andere Prozessor seinen Befehl zum Ausführen des jeweils vorliegenden Rechenschrittes. Aus dem Rechenschritt resultiert innerhalb vorbestimmter Zeit ein Ausgangssignal. Das Ausgangssignal wird über die jedem Prozessor zugeordnete busleitung dem Funktionsbaustein übermittelt. Dort wird überprüft, ob die beiden Ausgangssignale - die gleichnamig sind - innerhalb der vorgegebenen Toleranzfelder liegen, die fertigungsbedingt an den ansonsten baugleichen Prozessoren auftreten.

Es ist demnach von wesentlicher Bedeutung für die Erfindung, daß die Überprüfung der gleichnamigen Ausgangssignale zeitgleich mit deren Auftreten erfolgt. Die Erfindung ermöglicht die Signalüberprüfung synchron während derjenigen Zeit, in welcher die gleichnamigen Ausgangssignale mit dem gleichen Signalpegel über die Busleitungen ausgegeben werden. Bei Vorliegen zweier gleicher und gleichnamiger Signale wird dann dasjenige Steuersignal erzeugt, welches zur Beaufschlagung der Peripherie verwendet werden soll.

Hierfür werden die Signale anti-jitter und time-out erzeugt, die zum Signal CPU-clock zeitversetzt sind. Der Zeitversatz ist notwendig, um die Signallaufzeit vom Prozessor zum Funktionsbaustein zu berücksichtigen und um andererseits denjenigen Zeitversatz zwischen den Ausgangssignalen der beiden Prozessoren zu berücksichtigen, der durch Bauteiltoleranzen bedingt wird.

Das Signal "anti-jitter" wird aus dem Signal des Zeittaktgebers erzeugt. Da jeder Zeittakt ein Signal mit ansteigender und absteigender Flanke aufweist, läßt sich aus dem Flankenanstieg bzw. aus dem Flankenabstieg des clock-Signals jeweils ein kurzer Impuls erzeugen, dessen Laufzeit lediglich einen Bruchteil des Zeitabstandes zwischen zwei aufeinander folgenden Zeittakten ausmacht. Die kurzen Impulse ergeben eine Impulsfolge, die hier als Signal "anti-jitter" bezeichnet wird.

Jeder Impuls des Signals anti-jitter wird verwendet, um die gleichnamigen Ausgangssignale der Prozessoren auf Identität abzufragen. Demzufolge muß jeder Impuls des Signals anti-jitter dann die Gleichheitsüberprüfung auslösen, wenn unter Berücksichtigung des bautteiltoleranzbedingten Zeitversatzes die beiden Prozessoren identische Ausgangssignale haben sollten.

Zu einem Zeitpunkt, zu dem die gleichnamigen Signale der beiden Prozessoren nach Ablauf aller bauteiltoleranzbedingten Verschiedenheiten schließlich gleich sein müssen, wird mit dem Impuls des Signals time-out die Gleichheit getestet. Wird bei dieser Abfrage - unabhängig vom tatsächlichen Signalpegel 0 oder 1- festgestellt, daß die gleichnamig erwarteten Signale ungleich sind, löst dies ein Anzeigesignal "Ablauffehler" auf.

Mit einer derartigen Vorrichtung kann daher der bauteiltoleranzbedingte Zeitversatz von Prozessoren nach lediglich zwei Kriterien durchgeführt werden. Das erste Kriterium überprüft, ob der Zeitversatz noch zulässig ist. Damit würden die Ausgangssignale verwertbar sein. Das zweite Kriterium überprüft ggf. ob der Zeitversatz nicht mehr zulässig ist. Es würde dann das time-out Signal wirksam und ein entsprechender Ablauffehler angezeigt.

Es ist also von besonderer Bedeutung, daß mit der vorliegenden Erfindung die Überwachung durch den Funktionsbaustein während der Arbeitstakte der beiden Prozessoren erfolgt, in denen die beiden Prozessoren mit voller Arbeitsgeschwindigkeit betrieben werden können. Dies wird dadurch ermöglicht, daß die Überwachung der Ausgangssignale solange erfolgt, wie die gleichnamigen Signale der beiden Prozessoren einen übereinstimmenden Signalpegel haben.

Legt man die gleichnamigen Signale der beiden Prozessoren auf die Eingänge eines EXOR-Gatters, so liegt am Ausgang des EXOR-Gatters solange das Signal "0" an, wie an den beiden Eingängen ein übereinstimmender Signalpegel anliegt.

Das gewünschte Ausgangssignal der Signalverknüpfung läßt sich mit einem ODER-oder mit einem UND-Gatter erzeugen. Dann würde das Ausgangssignal so lange anstehen, wie der Zeitabstand zwischen dem Eintreffen des ersten Ausgangssignals des vorlaufenden Prozessors und dem Ende des Ausgangssignals des nachlaufenden Prozessors beträgt. In spezieller Weiterbildung wird das Signal anti-jitter getaktet mit einem so großen Zeitversatz, daß gleiche Signalpegel der Ausgangssignale der Prozessoren in jedem Fall innerhalb von zwei aufeinanderfolgenden Taktimpulsen des anti-jitter Signals auftreten müssen, sofern beide Prozessoren ordnungsgemäß funktionieren. Hierbei fallen ungleiche Pegel der Ausgangssignale sofort auf, sofern sie außerhalb der Bauteiltoleranzen der Prozessoren liegen. Es fallen daher Fehler im Funktionsablauf in einem der beiden Prozessoren sofort auf, weil innerhalb der Taktimpulse des anti-jitter Signals gleiche Signalpegel aus gleichnamigen Signalen erwartet werden. Die Überprüfung der Ausgangssignale kann folglich in einer ersten Stufe = anti-jitter dadurch geschehen, daß die Ausgangssignale der Prozessoren elektrisch voneinander entkoppelt und zu einem Prüfsignal verknüpft werden, welches von dem Flankensignal (= anti-jitter) zu dessen vorgegebenen zeitversetzten Taktimpulsen abgetastet wird. Dabei wird das jeweils abgetastete Prüfsignal bis zum nächsten Abtastzeitpunkt von einem Ausgangsspeicher stabil auf dem jeweils letzten Wert des Prüfsignals gehalten und das stabil gehaltene Signal als Ausgangssignal für die Peripherie verwertet.

Die elektrische Entkoppelung kann über ein ODER-Gatter erfolgen oder über ein UND-Gatter.

Bei Verwendung eines ODER-Gatters ist der mittlere Stromverbrauch der Bussignalleitung geringer als bei Verwendung eines UND-Gatters.

Dennoch lassen sich für die Erfindung auch UND-Gatter ohne weiteres einsetzen.

In einer zweiten Stufe (= time-out) werden zeitgleich die Ausgangssignale der beiden Prozessoren zu Zeitpunkten auf Gleichheit abgefragt, zu denen unter Berücksichtigung der bekannten Bautteiltoleranzen gleiche Signalpegel der Ausgangssignale vorliegen müssen. Da die Ausgangssignale jeweils paarweise vorhanden sind, kann bei Signalpegelabweichung auch nur eines einzigen Paares von Ausgangssignalen das Ablauffehlersignal ausgegeben werden.

Hierfür werden Ausführungsbeispiele gegeben. Vorteilhafte Ausführungsformen ergeben sich aus den Unteransprüchen. Im folgenden wird die Erfindung anhand von Ausführungsbeispielen näher erläutert.

Es zeigen:
- Fig.1: ein erstes Prinzipschaubild der Erfindung
- Fig.2: die Vergleichsstufe des Funktionsbausteins gemäß Fig.1 mit Ausgleich des bauteiltoleranzbedingten Zeitversatzes
- Fig.3.: die Vergleichsstufe des Funktionsbausteins gemäß Fig.1 mit Gleichheitsabfrage der Ausgangssignale
- Fig.4: die Vorrichtung zur Aufbereitung der Zeittaktsignale von clock
- Fig.5: den Signalverlauf während eines Arbeitstaktes.

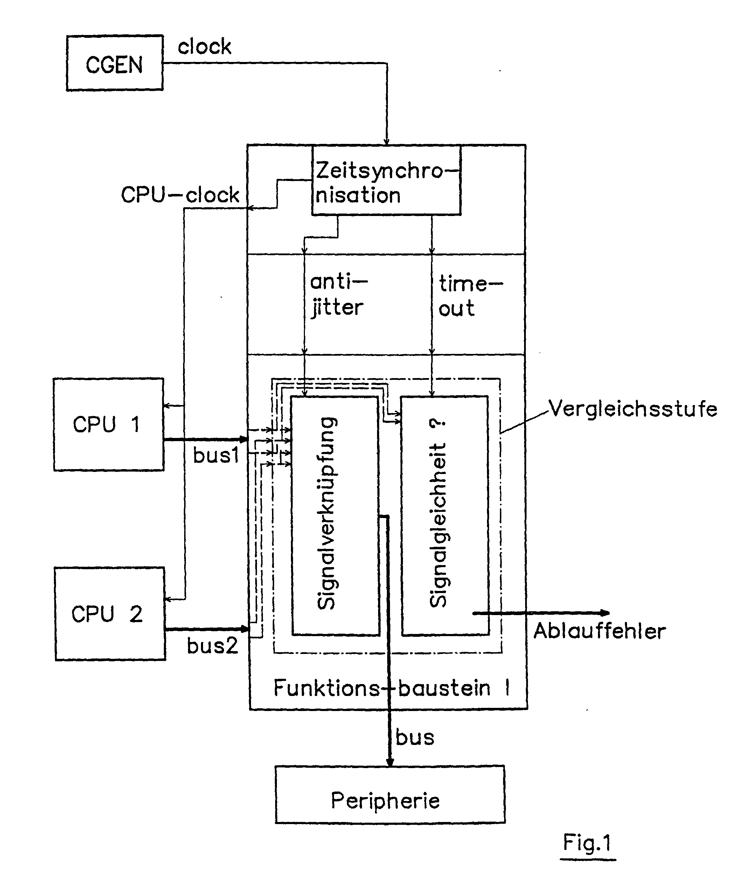

Fig.1 zeigt die für die Erfindung relevanten Baugruppen eines herkömmlichen Computers. CPU 1 sowie CPU 2 bezeichnen jeweils einen Prozessor. Jeder Prozessor ist über eine Zusammenfassung von Leitungen, sogenannte busleitungen mit einem Funktionsbaustein I verbunden. Beide Prozessoren CPU 1 und CPU 2 sind von dem genau gleichen Typ. Sie weisen identische Anschlußwerte auf, sie unterscheiden sich jedoch fertigungsbedingt. Der Unterschied wird als Bauteiltoleranz bezeichnet. Jeder Prozessor weist einen zugehörigen bus 1 bzw. bus 2 auf. Mit bus 1 bzw. bus 2 ist die Zusammenfassung aller Leitungen gemeint, die von Prozessor CPU 1 bzw. CPU 2 ausgehen und zur Steuerung der Peripherie vorgesehen wären, sofern es sich bei CPU 1 bzw. CPU 2 um den Einzelprozessor eines herkömmlichen Computers handeln würde.

bus 1 bzw. bus 2 enthalten den Adressbus, den Datenbus und den Kontrollbus.

Es muß daher neben einem zweiten Prozessor und dem Funktionsbaustein I auch noch jedem Prozessor ein separater bus zugeordnet werden, um die Erfindung zu realisieren.

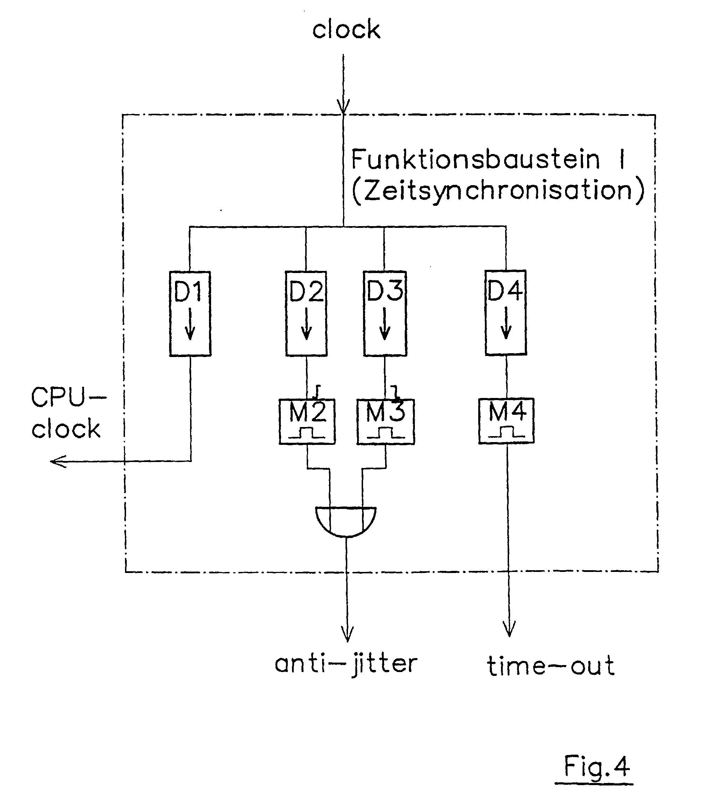

Der Funktionsbaustein I dient der Verbindung der Signale auf bus 1 bzw. bus 2 mit der Peripherie über den bus. In einer weiteren Funktion enthält der Funktionsbaustein I eine Baugruppe zur Erzeugung der Steuersignale "CPU-clock", "anti-jitter" und "time-out". Hierauf wird anhand von Fig.4 noch eingegangen.

Der Ausgang des Funktionsbausteins wird über den bus realisiert, der die Peripherie beaufschlagt, also alle diejenigen Bauteile, die im Falle eines herkömmlichen Computers über den einzigen Prozessor angesteuert werden, oder die Daten bevorraten, namentlich Speicher, Ein-Ausgabe.

Im vorliegenden Fall versteht es sich, daß die Peripherie abweichend vom Stand der Technik nicht von einem Prozessor sondern von einem verknüpften Ausgangssignal aus den Ausgangssignalen zweier Prozessoren angesteuert wird.

Der Zeittaktgenerator CGEN gibt die Zeittakte für das gesamte System vor. Hierzu zählen insbesondere die Zeittaktsignale - CPU-clock, anti-jitter und time-out -, welche zueinander zeitversetzt sind.

Es sei darauf hingewiesen, daß die Numerierung mit den Ziffern 1 und 2 keinerlei Bedeutungsabstufung darstellt. Die beiden Prozessoren oder die Numerierung sind ohne Veränderung der Funktion austauschbar. Zusätzlich können mit der Vorrichtung nach der vorliegenden Erfindung auch ohne weiteres mehr als zwei Prozessoren parallel und zeitgleich betrieben werden. Die Anzahl der parallelbetriebenen Prozessoren ist im Prinzip unbegrenzt.

Über den bus, also die Zusammenfassung aller Leitungen, die vom Funktionsbaustein I ausgehen, wird die Peripherie so gesteuert, als kämen die Steuersignale von einem einzelnen Prozessor. Über den bus werden daher lediglich die verknüpften Signale der CPU 1 und CPU 2 geführt.

Der Zeittaktgenerator CGEN liefert das Zeittaktsignal "clock" zur Steuerung des gesamten Systems. Es handelt sich z.B. um einen üblichen Zeittaktgenerator für einen Einzelprozessor. Das Zeittaktsignal clock wird über Verzögerungsglieder so aufbereitet, daß die Signale CPU-clock, anti-jitter und time-out entstehen. Hierauf wird anhand von Fig. 4 noch näher eingegangen werden. In einem anderen Verfahren werden die zeitversetzten Signale über Zähler und Teiler erzeugt, die aus einem hochfrequenten Takt durch Abzählen jeweils vorbestimmter Taktzahlen und ggf. durch Aufteilen der Zeiträume zwischen zwei Taktsignalen die zeitversetzten Signale CPU-clock, anti-jitter und time-out erzeugen.

Dabei ist das Signal CPU-clock derjenige Zeittakt, mit dem die beiden Prozessoren CPU 1 und CPU 2 betrieben werden. Beide Prozessoren werden parallel mit dem einzigen Signal CPU-clock gefahren, so als wären sie Einzelprozessoren.

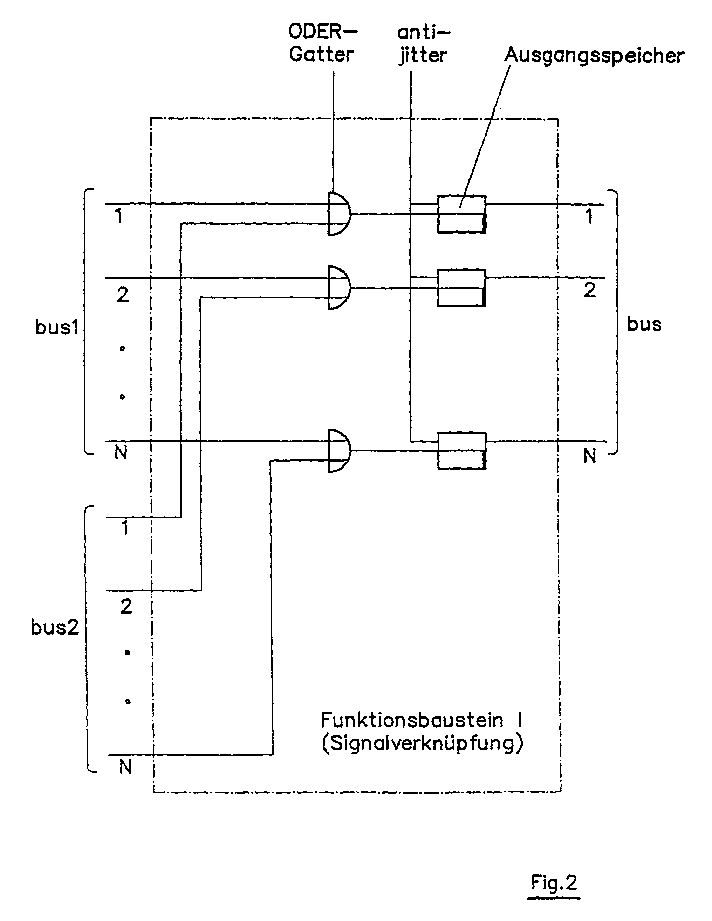

Das Signal "anti-jitter" ist ein Signal zur Steuerung des Funktionsbausteins 1, speziell zur Steuerung desjenigen Teils der Vergleichsstufe, die "Signalverknüpfung" heißt und auf die anhand von Fig.2 noch näher eingegangen wird. Dieses Signal anti-jitter gleicht die Unterschiede im Zeitverhalten der gleichnamigen Signale im bus 1 und bus 2 aus, die unvermeidbar durch Bauteiltoleranzen zwischen den beiden Prozessoren entstehen können. Ferner dient das Signal anti-jitter zur Beaufschlagung des Ausgangsspeichers.

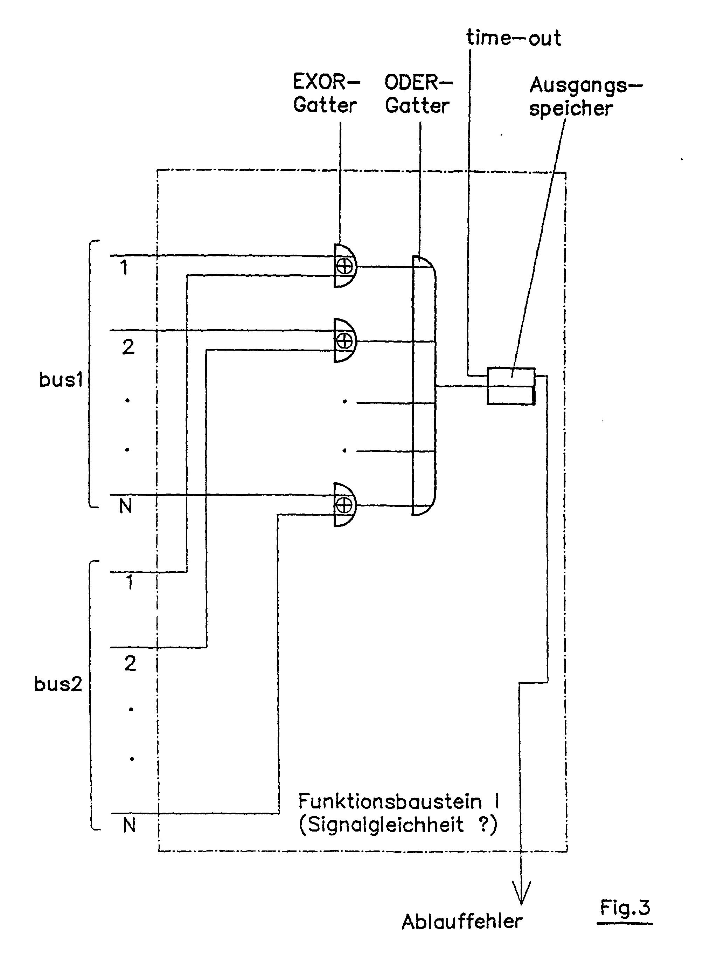

Das Signal "time-Out" dient zur Steuerung desjenigen Teils der Vergleichsstufe, die "Signalgleichheit?" heißt (Fig.3), welche hier ebenfalls im Funktionsbaustein I integriert ist.

Dieses Signal time-out gibt diejenigen Zeitpunkte an, zu denen alle gleichnamigen Signale in bus 1 und bus 2 identisch sein müssen. Ist dies nicht der Fall, steht der Zeitpunkt fest, an dem das Signal "Ablauffehler" erzeugt wird. Damit zusammenhängend kann der Ausgangsspeicher angewiesen werden, den Fehlerzustand zu speichern.

Das Signal "Ablauffehler" dient zur Kenntlichmachung eines nicht synchronen Verhaltens der beiden Prozessoren. Dieses Signal kann Fehlerbehebungsmaßnahmen durch externe Baugruppen einleiten, wie z.B. einen System-Reset oder auch mit Diagnose-Software verarbeitet werden, um das Rechnersystem stabil weiterzubetreiben

In den Figuren werden Bausteine und Leitungen durchgängig gleich indiziert.

Fig.2 zeigt die Anordnung der Vergleichsstufe innerhalb des Funktionsbausteines I, wo der bauteiltoleranzbedingte Zeitversatz der Ausgangssignale beider Prozessoren ausgeglichen wird und wo die Ausgangssignale zu einem einzigen für die Peripherie verwertbaren Ausgangssignal verknüpft werden.

Die Signale auf bus 1 und bus 2 sind hier aufgeteilt auf die einzelnen Signale, insgesamt N Stück, gezeichnet sind zur Verdeutlichung die Nr.1,2 und N.

Die Zahl N kennzeichnet dabei die Anzahl der für einen bus parallel notwendigen Signale. Sie beträgt z.B. für einen handelsüblichen 8 bit Prozessor mit 24 Kbyte Adressraum N = 8 für den Datenbus und N = 16 für den Adressbus. Die Bezeichnung "gleichnamige Signale" bedeutet eine Gleichnamigkeit z.B. des Signals "1 vom bus 1" und "1 vom bus 2", also Signale der beiden Prozessoren, von denen normalerweise gleiche Funktion erwartet wird.

Die ankommenden Signale vom bus 1 bzw. vom bus 2 werden in der Vergleichsstufe "Signalverknüpfung" so aufgeteilt, daß jeweils zwei gleichnamige Signale über ein ODER-Gatter zusammengeschaltet werden. Hier erfolgt die Entkoppelung der Ausgänge von CPU 1 und CPU 2, da die Signale nicht zwangsläufig exakt gleichzeitig erscheinen werden.

Zwar läßt sich die Entkoppelung der Ausgänge auch über "UND-Gatter" herbeiführen. Ein ODER-Gatter bietet jedoch gegenüber einem UND-Gatter den besonderen Vorteil, daß der mittlere Stromverbrauch der Signalleitungen des bus sinkt, da üblicherweise Widerstände oder Stromquellen als Terminatoren von jeder Signalleitung zur positiven Versorgungsspannung gelegt werden, deren Stromfluß bei einem niedrigen Pegel höher ist als bei einem hohen Pegel. Da der niedrige Pegel dann vorliegt, wenn das Signal logisch 0 ansteht und ein hoher Pegel dann vorliegt, wenn das Signal logisch 1 ansteht, folgt der geringere Stromverbrauch des ODER-Gatters unter Berücksichtigung der statistisch vorliegenden mittleren Signalzeiten.

Bei einem ODER-Gatter sind die Ausgängs im statistischen Mittel nämlich länger auf dem Pegel logisch 1, also im Zustand geringeren Stromverbrauchs als bei einem UND-Gatter. Zu einem definierten Zeitpunkt muß die Gleichheit der gleichnamigen Signale gegeben sein, sofern die Prozessoren ordnungsgemäß arbeiten. Zu diesem Zeitpunkt sollen die Signale von bus 1 und bus 2 zu einem bussignal verknüpft sein, welches als Steuersignal für die nachfolgend beaufschlagte Peripherie dient. Dieses Steuersignal wird durch den Ausgangsspeicher dadurch stabil gehalten, daß dieser mit dem Signal anti-jitter gesteuert wird.

Da das Ausgangssignal des ODER-Gatters so lange ansteht, wie die gleichnamigen Signale der beiden Prozessoren einen übereinstimmenden Signalpegel haben, kann durch das zeitversetzte Signal anti-jitter, insbesondere beim ersten auftretenden Impuls des Signals anti-jitter der Signalpegel des Ausgangs aus dem ODER-Gatter überprüft werden. Der zweite Impuls des Signals anti-jitter liegt allerdings außerhalb derjenigen Zeit, über welche der Ausgang des ODER-Gatters auf dem ursprünglichen Signalpegel gehalten wird. Der geänderte Signalpegel zum Zeitpunkt des zweiten Impulses des Signals anti-jitter ist daher festzustellen.

Hat sich das Signal aus dem ODER-Gatter bis dahin geändert, kann dieses Signal als verwertbares Ausgangssignal über den bus an die Peripherie abgegeben werden.

Ist dies nicht der Fall, erfolgt ein Signal time-out nach Maßgabe von Fig.3.

Hierzu zeigt Fig.3 die Anordnung der Vergleichstufe "Signalgleichheit?" innerhalb des Funktionsbausteins I, wo die Ausgangssignale der beiden Prozessoren CPU 1 und CPU 2 zu Zeitpunkten auf Gleichheit abgefragt werden, zu denen unter Berücksichtung der bekannten Bauteiltoleranzen gleiche Signalpegel auf jedem Signalpaar vorliegen müssen. Liegt eine Signalpegelabweichung auch nur innerhalb eines Paares von Ausgangssignalen vor, wird ein Ablauffehler ausgegeben. Die Sammelsignale bus 1 und bus 2 sind hier ebenfalls aufgeteilt auf die einzelnen Signale, insgesamt N Stück, bezeichnet sind auch hier zur Verdeutlichung nur die Nummern 1,2, und N.

Jeweils zwei gleichnamige Signale von bus 1 bzw. bus 2 werden über ein EXOR-Gatter zusammengeschaltet. In diesem EXOR-Gatter erfolgt der Vergleich der Ausgänge von CPU 1 und CPU 2.

Zu einem definierten Zeitpunkt muß die Übereinstimmung aller gleichnamigen Signale gegeben sein.

Um dies festzustellen, wird die Gleichheit aller in den einzelnen EXOR-Gattern verglichenen Signale dann mit einem gemeinsamen ODER-Gatter geprüft, da eine einzige Abweichung irgendeines der überprüften Signale Veranlassung gibt, einen Ablauffehler anzuzeigen. Zu dem Zeitpunkt der Überprüfung wird dann das Signal time-out zur Aktivierung des Ausgangsspeichers ausgegeben. Das resultierende Ausgangssignal des nachgeschalteten ODER-Gatters wird im erwarteten und normalerweise vorliegenden fehlerfreien Fall logisch 0 oder low oder inaktiv sein. Ist die Übereinstimmung aller Signale zu diesem Zeitpunkt nicht erreicht worden, ist das Ausgangssignal logisch 1 oder high oder aktiv. Es liegt folglich ein Ablauffehler vor. Dieses Ausgangssignal kann von externen Baugruppen ausgewertet werden z.B. zur Erzeugung eines System-Reset.

Die Verknüpfung dieser Funktionen ist wesentlich abhängig von der Takterzeugung. Einerseits lassen sich die hierfür notwendigen zeitversetzten Takte durch geeignete Schaltung von Zählern und Teilern erzielen. Fig.4 zeigt hier eine Version der Takterzeugung mit Verzögerungsgliedern. Bestandteil dieses Bestandteils des Funktionsbausteins I ist ein derartiger Zeitsynchronisationsbaustein entsprechend Fig.4. Das ankommende Zeittaktsignal clock wird aufgeteilt auf vier verschiedene Verzögerungsglieder D1-D4, die das Eingangssignal clock unverändert empfangen aber mit einer festen zeitlichen Verzögerung an ihren Ausgang weitergeben. Es wird also in dem Zeitsynchronisationsbaustein das ankommende Zeittaktsignal clock zu einem Prozessortaktsignal CPU-clock über das Verzögerungsglied D1, zu einem Verknüpfungssignal "anti-jitter" über die Verzögerungsglieder D2 und D3 sowie in das Signal time-out über das Verzögerungsglied D4 verändert.

Bei dem Signal time-out handelt es sich um ein Abtastsignal für das Ablauffehlerzeitsignal.

Die Verzögerungsglieder D2 bis D4 beaufschlagen die Monoflops M2 bis M4. Bei den Monoflops M2 bis M4 handelt es sich um jeweils verschiedene Monoflops, die ab dem Zeitpunkt der Flanke des Eingangssignales einen Ausgangsimpuls vorgegebener Länge erzeugen. Monoflop M2 reagiert bei steigender Flanke, Monoflop M3 reagiert bei fallender Flanke, Monoflop M4 muß nicht ausgezeichnet sein.

Dabei kommt es darauf an, daß die Verzögerungen durch die Verzögerungsglieder so vorgegeben werden, daß das Signal clock zur Erzeugung des Signals CPU-clock so verzögert wird, daß die Laufzeiten der anderen Signalbewertungen, namentlich anti-jitter und time-out, ausgeglichen werden.

Das ankommende Signal clock weist eine positive und eine negative Flanke auf. Hieraus wird über den Monoflop M2 bei der positiven Flanke des Signals clock ein erster kurzer Impuls erzeugt, der im Verhältnis zur Laufzeit des Prozessorsignals sehr kurz ist. Aus der negativen Flanke des Signals Clock wird über den Monoflop M3 ebenfalls ein kurzer Impuls erzeugt. Die beiden Impulse des Signal anti-jitter kennzeichnen die Zeitpunkte, zu denen die gleichnamigen Leitungen aus bus 1 und bus 2 den gleichen Zustand erreicht haben müssen, und zu denen diese Signale der Peripherie über die Leitung bus zugeführt sein müssen.

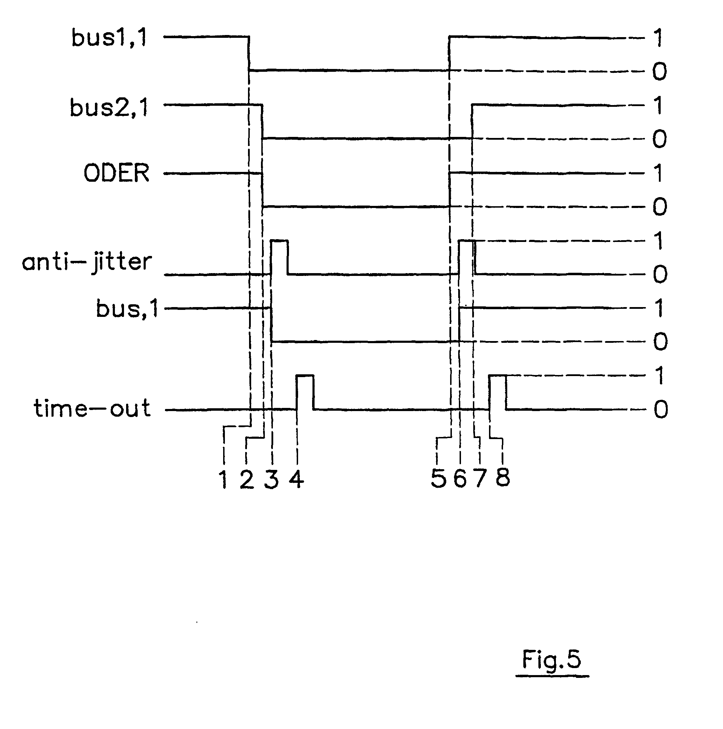

Das Signal time-out kennzeichnet einen Zeitpunkt nach dem zweiten Impuls (fallende Flanke des Signals clock) des Signales anti-jitter, zu dem die Signale der gleichnamigen Leitungen auf Gleichheit abgefragt werden, um bei Ungleichheit das Signal "Ablauffehler" zu erzeugen. Hierzu zeigt Fig.5 die Signale am Beispiel eines Adresssignales auf der Leitung 1 des bus 1 und bus 2. Die Adresssignale sind mit bus 1,1 bzw. bus 2,1 indiziert. Die wichtigen Zeitpunkte sind unten mit den Ziffern 1 bis 8 gekennzeichnet. Die Signalpegel low und high werden mit "0" und "1" bezeichnet.

Zum Zeitpunkt 1 geht das zufällig etwas frühere Signal der CPU 1 auf 0.

Zum Zeitpunkt 2 geht das zufällig etwas spätere Signal der CPU 2 auf 0.

Am ODER-Gatter entsprechend Fig.2 liegt ein Ausgangssignal 0 an, welches während desjenigen Zeitbereichs steht, in welchem die Signale bus 1,1 und bus 2,1 identisch 0 sind. Dieser Zeitraum liegt zwischen Zeitpunkt 2 und Zeitpunkt 5. Das Ausgangssignal des ODER-Gatters wird in diesem Zeitraum gebildet aus den zwei gleichnamigen Signalen des bus 1 und bus 2. Da eine Übereinstimmung der Ausgangssignale bus 1 und bus 2 vorliegt, kann das Ausgangssignal des ODER-Gatters gemäß Fig.2 über den bus als Signal 0 im Ausgangsspeicher abgelegt werden. Das Ausgangssignal dieses Ausgangsspeichers stellt ein stabiles um einige Nanosekunden verschobenes Abbild des Adressignals, verkoppelt aus den Signalen auf den Leitungen 1 aus bus 1 und bus 2 dar, und reicht vom Zeitpunkt 3 bis zum Zeitpunkt 6. Es handelt sich um das Signal bus, 1, welches über die Leitung 1 des bus zur Steuerung der Peripherie geeignet ist.

Der Zeitpunkt, zu dem das Signal 0 über bus,1 an den Ausgangsspeicher übermittelt wird, fällt mit dem Beginn des ersten kurzen Impulses des Signals anti-jitter zusammen. Es hält solange an, bis der zweite kurze Impuls des Signals anti-jitter einsetzt.

Im dazwischenliegenden Zeitraum erfolgt eine erste Abtastung durch das Signal time-Out, beginnend im Zeitpunkt 4. In diesem Moment besteht Gleichheit zwischen den Signalen bus 1,1 sowie bus 2,1.

Demzufolge liegt ein Ablauffehler nicht vor.

Zum Zeitpunkt 5 zeigt das ODER-Gatter an seinem Ausgang ein brauchbares Signal 1, da das etwas früher beginnende Signal der CPU 1 jetzt auf 1 geht.

Dieses Signal 1 wird zum Zeitpunkt 6 im Ausgangsspeicher entsprechend Fig.2 gespeichert. Der Zeitpunkt 6 fällt zusammen mit dem Beginn des zweiten Impulses des Signals anti-jitter. Da zu diesem Zeitpunkt bereits eines der Signale bus 1,1 bzw. bus 2,1 auf logisch 1 gegangen ist, kann das für das andere der Signale bus 1,1 bzw. Bus 2,1 ebenfalls in Kürze erwartet werden. Dies ist hier zum Zeitpunkt 7 der Fall. In diesem Zeitpunkt ist das hier zufällige spätere Signal der CPU 2 ebenfalls auf logisch 1. Dieser Zeitpunkt ist allerdings nur hinsichtlich eines etwaigen Ablauffehlers von Bedeutung. Da dieser Zeitpunkt vor Erscheinen des Signals time-out (Zeitpunkt 8) erfolgen muß, liegt dann ein Ablauffehler vor, wenn zum Zeitpunkt 8 der zufällig spätere Prozessor (hier CPU 2) noch nicht auf logisch 1 gegangen ist.

Es muß also bei ordnungsgemäßem Betrieb sichergestellt sein, daß der Zeitpunkt 7 vor dem Zeitpunkt 8 liegt. Zum Zeitpunkt 8 erfolgt nämlich die zweite Abtastung durch das Signal time-out. Hier ist wieder die Gleichheit der gleichnamigen Signale gegeben. Ein Ablauffehler liegt nicht vor.

Wäre allerdings die Leitung bus 2,1 noch im Zustand logisch 0, so hätte die Ungleichheit mit dem Signal bus 1,1 zu diesem Zeitpunkt das Signal "Ablauffehler" erzeugt.

Bei den nicht näher bezeichneten Ausgangsspeichern handelt es sich jeweils um ein handelsübliches, flankengesteuertes D-flipflip.

## Patentansprüche

1. Vorrichtung zum Betreiben von zwei funktionsmäßig parallelgeschalteten Prozessoren (CPU 1, CPU 2) bekannter, fertigungsbedingter Bauteiltoleranzen, von denen jeder zeitgetaktet angesteuert wird (CPU-clock), wobei beide Prozessoren (CPU 1, CPU 2) über eine gemeinsame Uhr (CGEN) getaktet werden und wobei beide Prozessoren (CPU 1, CPU 2) synchron getaktet werden, und deren beide Ausgangssignale (bus 1,1... N bzw. bus 2,1... N) einem Funktionsbaustein (I) zugeführt werden, in welchem der bauteiltoleranzbedingte Zeitversatz der Ausgangssignale (bus 1,1... N bzw. bus 2,1... N) beider Prozessoren (CPU 1, CPU 2) ausgeglichen wird und die für eine einzige Steuerfunktion verwendet werden, **dadurch gekennzeichnet, daß**
1.0 die zwei Prozessoren (CPU 1, CPU 2) in einem einzigen Rechner parallel zueinander betrieben werden, und daß hierzu
1.1. aus dem zeittakt (clock) eines einzigen Zeittaktgenerators (CGEN) für das gesamte System über parallele Aufbereitung von dessen Zeittaktsignal drei hierzu jeweils zeitversetzte Signale erzeugt werden, von denen eines das Signal CPU-clock ist, ein weiteres dem Ausgleich der Unterschiede im Zeitverhalten gleichnamiger Signale im bus 1 und bus 2 dient (Signal anti-jitter) und ein weiteres diejenigen Zeitpunkte angibt, zu denen alle gleichnamigen Signale in bus 1 und bus 2 identisch sein müssen (Signal time-Out) und daß der Funktionsbaustein (I) zusätzlich zu
1.2. den Ausgangssignalen (bus 1,1...N bzw. bus 2,1...N) beider Prozessoren (CPU 1, CPU 2) von den parallelen jedoch zeitversetzten Signalen anti-jitter und time-out beaufschlagt wird, und daß
1.2.1 mit dem Ausgleich des bauteiltoleranzbedingten Zeitversatzes gleichzeitig
1.2.2 die Verknüpfung der Ausgangssignale (bus 1,1... N bzw. bus 2,1... N) zu einem einzigen für die Peripherie des Rechners verwertbaren Ausgangssignal (bus,1... N) erfolgt.

2. Vorrichtung nach Anspruch 1, **dadurch gekennzeichnet, daß** der Funktionsbaustein zwei Bewertungen der bauteiltoleranzbedingten Zeitversätze durchführt und zwar einerseits nach dem Kriterium:
a. Zeitversatz noch zulässig und verwertbar und andererseits nach dem Kriterium
b. Zeitversatz nicht mehr zulässig.

3. Vorrichtung nach Anspruch 1, **dadurch gekennzeichnet, daß** die Überwachung durch den Funktionsbaustein während der Arbeitstakte der beiden Prozessoren (CPU 1, CPU 2) erfolgt, in denen die Prozessoren (CPU 1, CPU 2) mit voller Arbeitsgeschwindigkeit betrieben werden, und daß die Überwachung so lange erfolgt, wie die gleichnamigen Signale der beiden Prozessoren (CPU 1, CPU 2) einen übereinstimmenden Signalpegel (logisch 0, logisch 1) haben.

4. Vorrichtung nach Anspruch 2 oder 3, **dadurch gekennzeichnet, daß** der Funktionsbaustein getaktet wird mit einem Zeitversatz, bei welchem zwischen zwei Taktimpulsen
4.1 gleiche Pegel der Ausgangssignale beider Prozessoren (CPU 1, CPU 2) innerhalb der Bauteiltoleranzen erwartet werden und wobei die zeitversetzten Taktimpulse zur Erzeugung des Ausgangssignals (bus 1...N) dienen, und bei welchem eventuelle
4.2. ungleiche Pegel der Ausgangssignale beider Prozessoren (CPU 1, CPU 2) außerhalb von deren Bauteiltoleranzen als Fehler markiert werden.

5. Vorrichtung nach Anspruch 1-4, **dadurch gekennzeichnet, daß** die Ausgangssignale (bus 1,1... N, bus 2,1...N) der beiden Prozessoren (CPU 1, CPU 2) elektrisch voneinander entkoppelt und zu einem Prüfsignal (ODER) verknüpft werden, welches von einem Flankensignal (anti-jitter) zu vorgegebenen versetzten Zeitpunkten (3,6) abgetastet wird, wobei das jeweils abgetastete Prüfsignal bis zum nächsten Abtastzeitpunkt (6) von einem Ausgangsspeicher stabil auf dem jeweils letzten Wert des Prüfsignals (ODER) gehalten wird, und daß das stabil gehaltene Signal das verwertete einzige Ausgangssignal (bus,1...N) für die Peripherie ist.

6. Vorrichtung nach Anspruch 5, **dadurch gekennzeichnet, daß** die Ausgangssignale (bus 1,1...N bzw. bus 2,1...N) der beiden Prozessoren (CPU 1, CPU 2) mit ODER-Gattern entkoppelt werden.

7. Vorrichtung nach einem der Ansprüche 1-4, **dadurch gekennzeichnet, daß** die Ausgangssignale (bus 1,1...N bzw. bus 2,1...N) der beiden Prozessoren (CPU 1, CPU 2) zu Zeitpunkten (4,8) auf Gleichheit abgefragt werden, zu denen unter Berücksichtigung der bekannten Bautteiltoleranzen gleiche Signalpegel (logisch 0, logisch 1) auf jedem Signalpaar (bus 1,1, bus 2,1; bus 1,2, bus 2,2; bus 1,N, bus 2,N) vorliegen müssen, und daß bei Signalpegelabweichung auch nur innerhalb eines Paares von den Ausgangssignalen ein Ablauffehler ausgegeben wird.

8. Vorrichtung nach Anspruch 7, **dadurch gekennzeichnet, daß** die Gleichheitsabfrage in einem EXOR-Gatter erfolgt.

9. Vorrichtung nach Anspruch 7 und 8, **dadurch gekennzeichnet, daß** die Gleichheitsabfrage jeweils nach Beendigung eines Arbeitstaktes der beiden Prozessoren erfolgt.

10. Vorrichtung nach einem der Ansprüche 1-9, **dadurch gekennzeichnet, daß** in einem Zeitsynchronisationsbaustein ein ankommendes Zeitsignal (clock) jeweils zeitversetzt zu einem Prozessortaktsignal (CPU-clock) sowie zu einem Verknüpfungssignal (anti-jitter) sowie ggf. zu einem Ablauffehlerzeitsignal (time-out) aufbereitet wird.

11. Vorrichtung nach Anspruch 10, **dadurch gekennzeichnet, daß** die Signalaufbereitung über zueinander parallele Verzögerungsglieder (D1,D2,D3,D4) erfolgt, die parallel mit dem ankommenden Zeitsignal (clock) beaufschlagt werden.

12. Vorrichtung nach Anspruch 10, **dadurch gekennzeichnet, daß** die Signalaufbereitung mittels Zähler und Dekoder aus einem höherfrequenten Zeittaktsignal erfolgt.

13. Vorrichtung nach Anspruch 11, **dadurch gekennzeichnet, daß** das Signal anti-jitter aus den Ausgängen zweier Verzögerungsglieder (D2,D3) erzeugt wird, von denen das Erste (D2) über ein Monoflop (M2), reagierend auf steigende Flanken und von denen das Zweite (D3) über ein anderes Monoflop (M3), reagierend auf fallende Flanken, jeweils einen kurzen Impuls erzeugt.

## Claims

1. Device for operating two functionally parallel processors (CPU 1, CPU 2) of known manufacturing-induced component tolerances, each of which is actuated in a time-pulsed manner (CPU-clock), wherein both processors (CPU 1, CPU2) are pulsed by a common clock (CGEN) and wherein both processors (CPU 1, CPU 2) are pulsed synchronously, and of which both output signals (bus 1,1...N and bus 2,1...N) are supplied to a functional component (I) in which the component tolerance-induced time-shift of the output signals (bus 1,1...N and bus 2,1...N) of the two processors (CPU 1, CPU 2) is compensated, and which are used for a single control function, **characterised in that**
1.0 the two processors (CPU 1, CPU 2) are operated in parallel with each other in a single computer and that for this purpose
1.1 from the time pulse (clock) of a single time pulse generator (CGEN) for the whole system by way of parallel conditioning of the time pulse signal thereof three signals are produced, which three signals are each time-shifted with respect thereto, of which three signals one is the CPU-clock signal, a further one serves to compensate for the differences in the time response of signals of the same designation in bus 1 and bus 2 (signal anti-jitter) and a further one indicates the instants at which all the signals of the same designation in bus 1 and bus 2 must be identical (Signal time-out) and that the functional component (I) in addition to
1.2 the output signals (bus 1,1...N and bus 2,1...N) of the two processors ((CPU 1, CPU 2) is acted upon in an anti-jitter and time-out manner by the parallel but time-shifted signals, and **in that**
1.2.1 simultaneously with the compensation of the component tolerance-induced time-shift
1.2.2 the coupling takes place of the output signals (bus 1,1...N and bus 2,1...N) to a single output signal (bus, 1...N) which can be utilized for the peripheral of the computer.

2. Device according to claim 1, **characterised in that** the functional component carries out two evaluations of the component tolerance-induced time-shifts on the one hand according to the criterion:
a. time-shift still admissible and capable of being utilized and on the other hand according to the criterion
b. time-shift no longer admissible.

3. Device according to claim 1, **characterised in that** the monitoring by the functional component takes place during the working pulses of the two processors (CPU 1, CPU 2), in which the processors (CPU 1, CPU 2) are operated at full working speed, and that the monitoring is carried out for as long as the signals, of the same designation, of the two processors (CPU 1, CPU 2) have a corresponding signal level (logic 0, logic 1).

4. Device according to claim 2 or 3, **characterised in that** the functional component is pulsed with a time-shift in which between two clock pulses
4.1 equal levels for the output signals of both processors (CPU 1, CPU 2) within the component tolerances are expected and wherein the time-shifted clock pulses serve to produce the output signal (bus 1...N), and wherein possible
4.2 unequal levels for the output signals of both processors (CPU 1, CPU 2) outside the component tolerances thereof are marked as error.

5. Device according to claim 1-4, **characterised in that** the output signals (bus 1,1...N, bus 2,1...N) of the two processors (CPU 1, CPU 2) are electrically decoupled from each other and coupled to a test signal (OR) which is sampled by an edge signal (anti-jitter) at predetermined time-shifted instants (3, 6), wherein the respective sampled test signal is kept stable on the respective last value of the test signal (OR) by an output memory until the next sample instant (6), and that the signal which is kept stable is the utilized single output signal (bus, 1...N) for the peripheral.

6. Device according to claim 5, **characterised in that** the output signals (bus 1,1...N and bus 2,1...N) of the two processors (CPU 1, CPU 2) are decoupled with OR gates.

7. Device according to one of claims 1-4, **characterised in that** the output signals (bus 1,1...N and bus 2,1...N) of the two processors (CPU 1, CPU 2) are polled as to equality at instants (4, 8) at which under consideration of the known component tolerances equal signal levels (logic 0, logic 1) must be present on each signal pair (bus 1,1, bus 2,1; bus 1,2, bus 2,2; bus 1,N, bus 2,N), and that in the case of a deviation in the signal level even within only one pair of the output signals a procedure error is assumed.

8. Device according to claim 7, **characterised in that** the equality polling takes place in an EXCLUSIVE-OR gate.

9. Device according to claim 7 and 8, **characterised in that** the equality polling takes place in each case after termination of a working pulse of the two processors.

10. Device according to one of claims 1-9, **characterised in that** in a time-synchronisation component an incoming time signal (clock) is conditioned in each case time-shifted with respect to a processor pulse signal (CPU-clock) and with respect to a coupling signal (anti-jitter) and, where applicable, with respect to a procedure error time signal (time-out).

11. Device according to claim 10, **characterised in that** the signal conditioning takes place by means of mutually parallel delay elements (D1, D2, D3, D4) which are acted upon in parallel with the incoming time signal (clock).

12. Device according to claim 10, **characterised in that** the signal conditioning takes place by means of counters and decoders from a higher frequency time pulse signal.

13. Device according to claim 11, **characterised in that** the signal is produced in an anti-jitter manner from the outputs of two delay elements (D2, D3), of which the first (D2) produces a respective short pulse by means of a monostable multivibrator (M2) in reaction to a rising edge, and of which the second (D3) produces a respective short pulse by means of another monostable multivibrator (M3) in reaction to a trailing edge.

## Revendications

1. Dispositif pour faire fonctionner deux processeurs à fonctions parallèles (CPU 1, CPU 2) de tolérances de composants connues, conditionnées par la fabrication, étant précisé que chaque processeur est déclenché suivant une cadence donnée (horloge CPU), que les deux processeurs (CPU- 1, CPU 2) sont cadencés par l'intermédiaire d'une horloge commune (CGEN), qu'ils sont cadencés de manière synchrone et que leurs deux signaux de sortie (bus 1,1... N, bus 2,1...N) sont transmis à un module fonctionnel (I) dans lequel le décalage dans le temps, dû aux tolérances de composants, des signaux de sortie (bus 1,1...N, bus 2,1...N) des deux processeurs (CPU 1, CPU 2) est compensé, et lesdits processeurs étant utilisés pour une seule fonction de commande, **caractérisé en ce que**
1.0 les deux processeurs (CPU 1, CPU 2) fonctionnent parallèlement dans un ordinateur unique, et **en ce que**, à cet effet,
1.1 à partir de la cadence d'un seul générateur de séquence de synchronisation (CGEN) pour tout le système, par l'intermédiaire d'un traitement parallèle du signal de synchronisation de celui-ci, sont générés trois signaux décalés dans le temps par rapport à ce dernier, parmi lesquels l'un est le signal horloge CPU, un autre sert à compenser les différences de comportement dans le temps de signaux de même nom dans le bus 1 et le bus 2 (signal anti-gigue), et un autre indique les moments où tous les signaux de même nom doivent être identiques (signal temps mort) dans le bus 1 et le bus 2, et **en ce que**
1.2 le module fonctionnel (I), en plus des signaux de sortie (bus 1,1...N, bus 2,1...N) des deux processeurs (CPU 1, CPU 2), est sollicité par les signaux anti-gigue et temps mort parallèles mais décalés dans le temps, et **en ce que**
1.2.1 en même temps que la compensation du décalage dans le temps dû aux tolérances de composants
1.2.2 a lieu la combinaison des signaux de sortie (bus 1,1...N, bus 2,1...N) en un seul signal de sortie (bus,1...N) exploitable pour la périphérie de l'ordinateur.

2. Dispositif selon la revendication 1, **caractérisé en ce que** le module fonctionnel effectue deux évaluations des décalages dans le temps dus aux tolérances de composants, à savoir d'une part en fonction du critère :
a. le décalage dans le temps est encore autorisé et exploitable, et d'autre part en fonction du critère :
b. le décalage dans le temps n'est plus autorisé.

3. Dispositif selon la revendication 1, **caractérisé en ce que** la surveillance par le module fonctionnel a lieu pendant les cycles de travail des deux processeurs (CPU 1, CPU 2) lors desquels les processeurs (CPU 1, CPU 2) fonctionnent à une vitesse de travail maximale, et **en ce que** la surveillance dure tant que les signaux de même nom des deux processeurs (CPU 1, CPU 2) ont des niveaux de signaux qui coïncident (logique 0, logique 1).

4. Dispositif selon la revendication 2 ou 3, **caractérisé en ce que** le module fonctionnel est cadencé avec un décalage de temps en présence duquel entre deux impulsions d'horloge,
4.1 on attend le même niveau des signaux de sortie des deux processeurs (CPU 1, CPU 2) à l'intérieur des tolérances de composants, et les impulsions d'horloge décalées dans le temps servent à générer le signal de sortie (bus 1...N), et en présence duquel d'éventuels
4.2 niveaux différents des signaux de sortie des deux processeurs (CPU 1, CPU 2) sont identifiés comme des erreurs en dehors des tolérances de composants desdits processeurs.

5. Dispositif selon les revendications 1 à 4, **caractérisé en ce que** les signaux de sortie (bus 1,1...N), bus 2,1...N) des deux processeurs (CPU 1, CPU 2) sont découplés électriquement l'un de l'autre et sont combinés en un signal de contrôle (OU) qui est analysé par un signal de flanc (anti-gigue) à des moments décalés prédéfinis (3, 6), étant précisé que jusqu'au moment d'analyse suivant (6), le signal de contrôle analysé est maintenu stable à la dernière valeur du signal de contrôle (OU) par une mémoire de sortie, et **en ce que** le signal maintenu stable est le seul signal de sortie (bus, 1...N) exploité pour la périphérie.

6. Dispositif selon la revendication 5, **caractérisé en ce que** les signaux de sortie (bus 1,1...N, bus 2,1...N) des deux processeurs (CPU 1, CPU 2) sont découplés avec les éléments OU.

7. Dispositif selon l'une des revendications 1 à 4, **caractérisé en ce qu'**on vérifie si les signaux de sortie (bus 1,1...N, bus 2,1...N) des deux processeurs (CPU 1, CPU 2) sont identiques, à des moments (4, 8) où compte tenu des tolérances de composants connues, il doit y avoir des niveaux de signaux (logique 0, logique 1) identiques sur chaque paire de signaux (bus 1,1, bus 2,1 ; bus 1,2, bus 2,2 ; bus 1,N, bus 2,N), et **en ce que** dans le cas d'un écart de niveau des signaux ne serait-ce qu'à l'intérieur d'une paire des signaux de sortie, une erreur de déroulement est sortie.

8. Dispositif selon la revendication 7, **caractérisé en ce que** la vérification d'égalité a lieu dans un circuit OU exclusif.

9. Dispositif selon les revendications 7 et 8, **caractérisé en ce que** la vérification d'égalité a lieu après la fin d'un cycle de travail des deux processeurs.

10. Dispositif selon l'une des revendications 1 à 9, **caractérisé en ce que** dans un module de synchronisation, un signal horaire (horloge) qui arrive est traité avec un décalage dans le temps par rapport à un signal d'horloge de processeur (horloge CPU) et à un signal de combinaison (anti-gigue), et éventuellement à un signal horaire d'erreur de déroulement (temps mort).

11. Dispositif selon la revendication 10, **caractérisé en ce que** le traitement des signaux se fait par l'intermédiaire d'éléments de retard parallèles (D1, D2, D3, D4) qui sont sollicités parallèlement au signal horaire qui arrive (horloge).

12. Dispositif selon la revendication 10, **caractérisé en ce que** le traitement des signaux se fait à l'aide d'un compteur et d'un décodeur à partir d'un signal de synchronisation à plus haute fréquence.

13. Dispositif selon la revendication 11, **caractérisé en ce que** le signal anti-gigue est généré à partir des sorties de deux éléments de retard (D2, D3), qui génèrent chacun une courte impulsion, par l'intermédiaire d'une bascule monostable (M2) en réaction à des flancs ascendants, pour le premier (D2), et par l'intermédiaire d'une autre bascule monostable (M3) en réaction à des flancs descendants, pour le second (D3).
